# EUROPÄISCHE PATENTSCHRIFT

(11) **EP 1 507 696 B1**
(45) Veröffentlichungstag und Bekanntmachung des Hinweises auf die Patenterteilung: **20.07.2005**
(21) Anmeldenummer: 04730787.1
(22) Anmeldetag: 01.05.2004
(51) Int. Cl.: B62D 55/265, A47L 1/02

(54) **SELBSTKLETTERNDES FAHRWERK FÜR FASSADEN INSBESONDERE GLASFASSADEN**
AUTOMATIC CLIMBING MECHANISM FOR FACADES, ESPECIALLY GLASS FACADES
CHASSIS AUTOGRIMPEUR DESTINE A DES FACADES, NOTAMMENT DES FACADES DE VERRE

(30) Priorität: 07.05.2003 DE 10320570
(43) Veröffentlichungstag der Anmeldung: 23.02.2005
(73) Patentinhaber: Unique Cleaning Systems Gmbh, 09468 Geyer (DE)
(72) Erfinder: SMOLINSKI, Hans-Joachim, 09456 Annaberg-Buchholz (DE); MEYER, Steffen, 09430 Drebach (DE); HASL, Werner, 09471 Bärenstein (DE)
(74) Vertreter: Ilberg, Roland W., Dipl.-Ing.
(86) Internationale Anmeldenummer: PCT/DE2004/000899
(87) Internationale Veröffentlichungsnummer: WO 2004/098984

(56) Entgegenhaltungen:
- DE-A- 2 458 491
- DE-U- 29 622 167
- US-A- 6 105 695

## Beschreibung

Die Erfindung betrifft ein selbstkletterndes Fahrwerk für Fassaden, insbesondere Glasfassaden, mit einem Antrieb aus Endlosreihen steuerbarer Vakuumsauger. Das selbstkletternde Fahrwerk kann beispielsweise einen Glasreinigungsroboter tragen. Andere Anwendungen betreffen selbstkletternde Fahrwerke für Inspektions-, Sanier- und Transportaufgaben an Fassaden oder dergleichen schräger, senkrechter oder überhängender glatten Flächen.

### Stand der Technik

Für das Fortbewegen an senkrechten oder geneigten Fassaden, insbesondere an Glasfassaden, ist es bekannt, selbstkletternde Vorrichtungen einzusetzen, die ihre Haftkraft über Elektromagnetkraft (DE 27 37 619 A1) oder über Vakuum aufbauen, wobei der Begriff "Vakuum" streng genommen für Unterdruck steht. Hinsichtlich der Fortbewegungsart unterscheidet man bei der Vakuumtechnik, auf welche im weiteren abgestellt werden soll, Schreitwerke und Fahrwerke.

Schreitwerke erreichen derzeit nur Arbeitsgeschwindigkeiten bis zu 1m/min. Die Fortbewegung erfolgt periodisch mit Haltepausen. Um Arbeitsgeschwindigkeiten von 1m/ min zu erreichen, muss die Hälfte der Vakuumsauger gelöst, angehoben und vorausgeschoben werden. Danach erfolgt das Absenken und Ansaugen dieser Sauger. Anschließend müssen die restlichen Sauger mit gleicher Vorgehensweise nachgeführt werden. Somit schwankt die verfügbare Haltekraft ständig zwischen 50% und 100%. Werden die Sauger paarweise oder einzeln vorangeschoben bzw. nachgeführt, dann sinkt die Fortbewegungsgeschwindigkeit beträchtlich unter 1m/min. Nachteilig ist ebenfalls der hohe Steuerungs- und Überwachungsaufwand der einzelnen Bewegungen. Ein Vorteil solcher Vorrichtungen ist die einfach zu realisierende Lenkbarkeit durch seitliches Versetzen quer zur Fortbewegungsrichtung und die der Vorrichtung von Anfang an gegebene Fähigkeit, kleinere Hindernisse, wie Glasfassadenprofile, zu überwinden. Schreitende Vorrichtungen sind beschrieben in DE 198 35 038 C1, DE 199 07 437 A1, EP 0 401 120 A1, US 4 674 949, und US 5 551 525.

Fahrwerke erreichen höhere Arbeitsgeschwindigkeiten von 3m/ min bis zu 10m/ min. Die Fortbewegung ist gleichförmig ohne Haltepausen und die Arbeitstakte: Sauger lösen, anheben, nachführen, absenken und ansaugen können für die betreffenden Sauger gleichzeitig erfolgen. Die ständig verfügbare Haltekraft schwankt somit nur zwischen 80% bzw. 90% und 100%. Vorteilhaft ist auch der geringere Steuerungsaufwand, da die Arbeitstakte zwangsgesteuert werden können. Nachteilig an bekannten Fahrwerken ist die ungenügende Lenkbarkeit, wie seitliches Versetzen quer zur Fortbewegungsrichtung und die im Grundmechanismus nicht vorhandene Fähigkeit, an senkrechten Wänden, wie insbesondere auch Glasfassaden, Fassadenprofile oder ähnliche Hindernisse zu überwinden. Die Radgeometrie bietet nicht genug Auflagefläche und ist für das Tragen von Saugern relativ ungeeignet. Beispiele für Fahrwerke sind in DE 197 27 421 C2, DE 296 22 167 U1, EP 0 505 956 A1, US 5 487 440 und US 6 090 221 beschrieben.

Bei den Fahrwerken ist die Kettenfahrtechnik, wie sie seit langem bei gepanzerten Kettenfahrzeugen und Raupenfahrzeugen verwendet wird, die derzeit praktikabelste Lösung. Jedoch müssen die umlaufenden Triebmittel, wie Ketten, Bänder, Seile oder Riemen, welche die Fortbewegung realisieren sollen, noch mit Saugern versehen sein. Stellvertretend wird für alle entsprechend geeigneten Triebmittel der Begriff "Kette" verwendet, ohne dass damit irgendeine Einschränkung vorgenommen sein soll.

Das Prinzip beruht darauf, dass jeder an einer Kette befestigte Sauger eine Endlosschleife durchläuft. Die der Fahrfläche zugewandten Sauger sind mit Vakuum beaufschlagt und halten das Fahrwerk an der Fassade. Setzt man die Ketten in Bewegung, müssen die jeweils hinteren Sauger belüftet werden, damit sich diese Sauger von der Fahrfläche lösen und die Ketten diese Sauger um 180° schwenken können. Die Sauger der aktuell umgeschwenkten Sauger zeigen somit in die von der Fahrfläche abgewandte Richtung. In dieser Lage werden die Sauger in Fahrtrichtung transportiert und wieder um 180° geschwenkt, womit die Sauger der Fahrfläche wieder zugewandt werden. Nun erfolgt die Beaufschlagung mit Vakuum, und die Sauger werden aktiv und können das Fahrwerk auf der Fahrfläche fixieren. Nachdem das Fahrwerk über die angesaugten Sauger hinweggefahren ist, werden diese erneut belüftet und geschwenkt. Dieser Vorgang wiederholt sich während des Fahrens für jeden einzelnen Sauger fortwährend.

Die bekannten Kettenfahrwerke für Fassaden unterscheiden sich meist nur dadurch, wie sie die Sauger nach dem Schwenken parallel auf der Fahrfläche aufsetzen bzw. abheben oder abschwenken (DE 29 622 167 U1), und wie die Vakuumzuführung realisiert ist (EP 505 956 A1).

Ein großer Nachteil der kontinuierlich fahrenden Laufwerke besteht darin, dass sie keine Hindernisse, wie z.B. Glasfassadenprofile von höher als ca. 1cm, überwinden können. Außerdem lassen sich nur sehr kleine Trimmlenkbewegungen ausführen. Auch haben sie konstruktionsbedingt eine sehr große Masse und Bauhöhe.

### Wesen der Erfindung

Aufgabe der Erfindung ist es, ein preiswertes, betriebssicheres und relativ schnell und kontinuierlich sowohl vor- als auch rückwärts fahrendes, selbstkletterndes Fahrwerk geringer Masse und Bauhöhe zu schaffen, welches sehr sicher an einer schrägen, senkrechten oder überhängenden Fassade über größere Reichweiten ferngesteuert fährt, Fassadenprofile von über 1cm bis mindestens 4cm Höhe überwindet, so gut lenkbar ist, dass es auf der Stelle wenden kann, nicht an Seilen oder ähnlichen Hilfsmitteln hängt und vorzugsweise für Kletterroboter zur Glasfassadenreinigung, aber auch beispielsweise für Transport-, Sanier- und Inspektionsarbeiten, einsetzbar ist und einen minimierten Steueraufwand und Energieverbrauch für seinen Betrieb hat.

Die Aufgabe wird erfindungsgemäß nach den Merkmalen des Anspruchs 1 gelöst. Vorteilhafte Ausgestaltungen und Weiterentwicklungen zeigen die abhängigen Ansprüche auf.

Mit der Erfindung ist ein kontinuierlich und relativ schnelles selbstkletterndes Fahrwerk für Roboter geschaffen worden, welches selbständig an einer schrägen, senkrechten oder sogar überhängenden Fassade emporklimmt, Fassadenprofile von mindestens 4cm Höhe überwindet, auf der Stelle wenden kann, einen vergleichsweise geringen Steuer- und Energieaufwand erfordert und nicht an Seilen oder ähnlichen Hilfsmitteln hängt.

Das erfindungsgemäße selbstkletternde Fahrwerk hat zwei Kettenbahnführungen, die im Gegensatz zu bekannten Kettenantrieben nicht senkrecht zur Fahrfläche, sondern parallel zur Fahrfläche des Fahrzeugs orientiert sind, also flach gelegt sind, wobei die entlang der Kettenbahnführungen bewegten Sauger ihre parallele Lage zur Fahrfläche stets beibehalten. Die Sauger weisen also stets zur Fahrfläche, ganz gleich, ob sie aktiv sind oder nicht aktiv sind. In Weiterbildung der Erfindung realisieren rückwärtig an den Saugern angreifende Schieber ein senkrechtes Absenken und Absetzen der Sauger auf die Fahrfläche sowie ein senkrechtes Abheben und Zurückführen der Sauger in die Grundstellung. Die Schieber realisieren somit einen parallelen und konstanten Abstand des Fahrwerks von der Fahrfläche und gewährleisten damit die nötige Bodenfreiheit für ein Überwinden von Hindernissen, wie speziell Glasfassadenprofile.

Die Schieber werden längs der Kettenbahnführungen geführt und sind untereinander mit den Ketten oder funktionell gleichwertigen Triebmitteln verbunden. Der Begriff "Schieber" soll dabei für alle funktionell geeigneten Führungsbauteile für die Sauger stehen.

### Ausführungsbeispiele für die Erfindung

Die Erfindung soll anhand von Ausführungsbeispielen näher erläutert werden.

In den zugehörigen Zeichnungen zeigen:
- Fig. 1: eine erste Variante von Kettenbahnführungen eines Fahrwerks in der Draufsicht,
- Fig. 2: eine weitere Variante von Kettenbahnführungen eines Fahrwerks in der Draufsicht,
- Fig. 3: eine weitere Variante von Kettenbahnführungen eines Fahrwerks in der Draufsicht,
- Fig. 4: eine weitere Variante von Kettenbahnführungen eines Fahrwerks in der Draufsicht,
- Fig. 5: eine weitere Variante von Kettenbahnführungen eines Fahrwerks in der Draufsicht,
- Fig. 6: die Ansicht nach Fig. 1 von einer Stirnseite aus,
- Fig. 7: die Ansicht nach Fig. 4 von einer Stirnseite aus und
- Fig. 8: die Seitenansicht eines Schiebers.

Funktionell äquivalente Bauteile sind in allen Figuren mit denselben Bezugszeichen versehen.

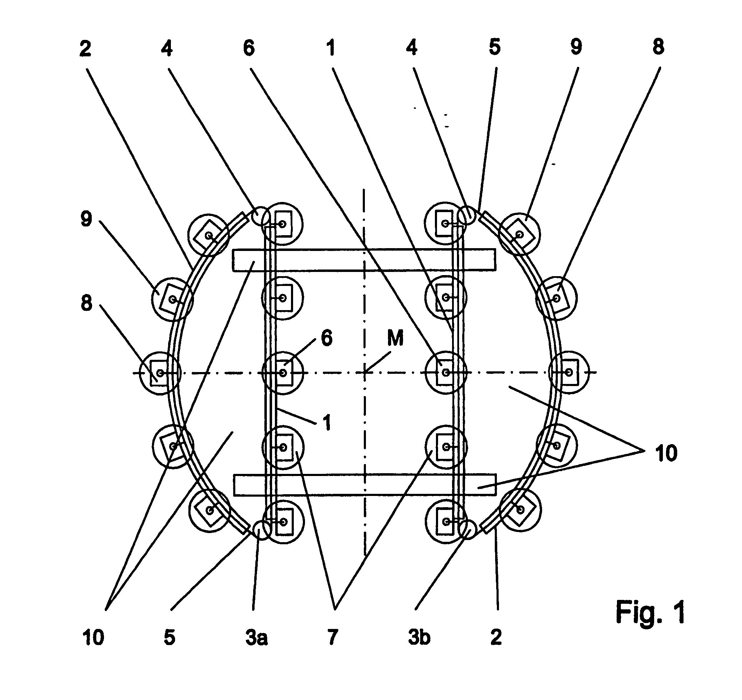

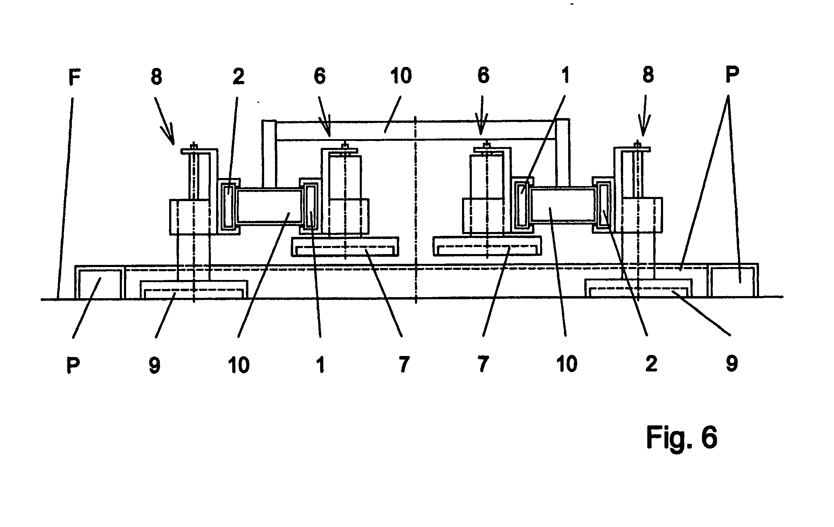

Gemäß der **Figuren 1** und **6** sind zwei Kettenbahnführungen **1,2** eines Fahrwerks aus jeweils einer exakten Geradführung **1** für das Vorwärts- und Rückwärtsfahren bzw. Auf- und Abfahren an einer Fassade und jeweils einer exakten Teilkreisführung **2** für das Drehen und Wenden auf der Stelle zusammengesetzt. Die beiden Teilkreisführungen **2** haben einen solchen Radius und sind so zueinander beabstandet, dass sich ein gedachter Vollkreis mit dem Mittelpunkt **M** um beide Teilkreise schlagen lässt. Zwischen den Geradführungen **1** und den Teilkreisführungen 2 sind Antriebsräder **3a, 3b** bzw. Umlenkräder **4** angebracht, um umlaufende Ketten **5** anzutreiben und in den Kettenbahnführungen zu führen. Die Antriebsräder **3a, 3b** dienen zugleich als Umlenkräder auf der entgegengesetzten Seite der reinen Umlenkräder **4**. Mit den Ketten 5 laufen an Schiebern **6,8** befestigte Sauger **7,9** um.

Soll das Fahrwerk an einer Fassade in gerader Richtung senkrecht nach oben oder unten fahren, müssen alle Schieber **6** innerhalb der beiden Geradführungen **1** zum Ausfahren angesteuert sein und die dazugehörigen Sauger **7** mit Vakuum beaufschlagt werden. Diese Sauger **7** sind somit als einzige auf der Fahrfläche angesaugt. Alle übrigen Schieber **8** und Sauger **9** befinden sich in der Grundstellung, das heißt, die Schieber **8** sind eingefahren und ihre Sauger **9** ohne Vakuum beaufschlagt. Werden die Antriebsräder **3a, 3b** gleichmäßig in entgegengesetzter Drehrichtung angetrieben (Antriebsrad **3a** in Uhrzeigerrichtung und Antriebsrad **3b** in Gegenuhrzeigerrichtung), bewegt sich das Fahrwerk geradeaus vorwärts, beispielsweise an einer Glasfassade empor. Wird hingegen das Antriebsrad **3b** in Uhrzeigerrichtung und das Antriebsrad **3a** in Gegenuhrzeigerrichtung angetrieben, bewegt sich das Fahrwerk ohne Wendemanöver entgegengesetzt, beispielsweise an einer Glasfassade hinab. Erreicht einer der Schieber **6,8**, welche längs der beiden Kettenbahnführungen **1,2** durch die beiden Ketten **5** bewegt werden, ein Geradführungsende bzw. einen Geradführungsanfang, wird er umgesteuert. Die Teilkreisführungen **2** haben keinen Einfluss. Das heißt für die Schieber **6** innerhalb der beiden Geradführungen 1 bei Erreichen des Geradführungsendes: Vakuumerzeugung abschalten und danach Schieber in die Grundstellung einfahren. Gleichfalls gilt für die Schieber **8** außerhalb der beiden Geradführungen **1** bei Erreichen des Geradführungsanfangs: Vakuumerzeugung einschalten und danach Schieber ausfahren.

Berührt ein Sauger **7** die Fahrfläche **F** (**Fig. 6**), wird er vom Umgebungsluftdruck fest an die Fahrfläche **F** angepresst, und damit bringt dieser Sauger **7** einen Teil der erforderlichen Haltekraft auf. Trifft der Sauger **7** beim Ausfahren seines Schiebers **6** auf ein Fassadenprofil **P** (**Fig. 6**), was sensorisch kontrolliert wird, stoppt die Zustellbewegung des Schiebers **6** automatisch. Dadurch wird ein Abstoßen des Fahrwerks von einer senkrechten Fassade wirkungsvoll verhindert. Außerdem wird die Vakuumerzeugung in dem betreffenden Sauger **7** deaktiviert. Beim Verlassen der Geradführung **1** wird der Schieber, jetzt Schieber **8**, erneut umgesteuert und in die Grundstellung eingefahren. Wie aus **Fig. 6** zu ersehen ist, bestimmt der Hub der Schieber **6, 8** bzw. die lichte Höhe der Sauger **7,9** in der Grundstellung über der Fahrfläche **F** die maximal zu überwindende Höhe von Hindernissen, also insbesondere von Fassadenprofilen **P**.

Für Fahrtrichtungsänderungen und Wendemanöver wird das Fahrwerk angehalten und im Stand geschwenkt oder gedreht. Dazu sind die Schieber **8** innerhalb der beiden Teilkreisführungen **2** auszufahren und die zugehörige Sauger **9** mit Vakuum zu beaufschlagen, damit sie sich an der Fahrfläche **F** ansaugen. Erst danach werden auf den beiden Geradführungen **1** die Sauger **7** belüftet und die Schieber **6** in die Grundstellung eingezogen. Es sind somit nur die Sauger **9** beider Teilkreisführungen **2** auf der Fahrfläche **F** angesaugt, die innerhalb der beiden Teilkreisführungen **2** den gedachten Kreis mit dem Mittelpunkt **M** beschreiben. Alle übrigen Schieber **6** befinden sich in der Grundstellung, das heißt, die Schieber **6** sind eingefahren und ihre Sauger **7** ohne Vakuumbeaufschlagung.

Treibt man beide Antriebsräder **3a, 3b** gleichmäßig in derselben Drehrichtung entgegen dem Uhrzeigerdrehsinn an, dann schwenkt das gesamte Fahrwerk in Uhrzeigerdrehrichtung um den Kreismittelpunkt **M**, der von den beiden Teilkreisführungen **2** vorgegeben wird. Werden beide Antriebsräder **3a, 3b** gleichmäßig in Uhrzeigerrichtung gedreht, schwenkt das Fahrwerk gegen die Uhrzeigerrichtung um den Mittelpunkt **M**. Erreicht einer der Schieber **6,8**, welche längs der Kettenbahnführungen durch die Ketten **5** bewegt werden, ein Kurvenführungsende bzw. einen Kurvenführungsanfang, wird er umgesteuert. Die beiden Geradführungen **1** haben keinen Einfluss. Das heißt für die Schieber **8** innerhalb der beiden Teilkreisführungen **2** bei Erreichen des Kurvenführungsendes: Vakuumerzeugung ausschalten und danach Schieber **8** in die Grundstellung einfahren. Für die Schieber **6** außerhalb der beiden Teilkreisführungen **2** gilt bei Erreichen des Kurvenführungsanfangs: Vakuumerzeugung einschalten und danach Schieber **6** ausfahren. Berührt ein Sauger **9** die Fahrfläche **F**, wird er vom Umgebungsluftdruck fest an diese angepresst. Damit bringt dieser Sauger **9** einen Teil der erforderlichen Haltekraft auf.

Trifft der Sauger **9** beim Ausfahren des Schiebers **8** auf ein Fassadenprofil **P**, was sensorisch kontrolliert wird, stoppt automatisch die Zustellbewegung des Schiebers **8**, wodurch ein Abstoßen des Fahrwerks von der Fassade verhindert wird. Außerdem wird die Vakuumerzeugung für den betreffenden Sauger **9** deaktiviert. Beim Verlassen der Teilkreisführung **2** wird der Schieber **8** erneut umgesteuert und in die Grundstellung eingefahren. Wie aus **Fig. 6** zu ersehen ist, bestimmt der Hub der Schieber **6,8** bzw. die lichte Höhe der Sauger **7,9** in eingefahrener Stellung über der Fahrfläche **F** die maximal zu überwindende Höhe von Hindernissen, also insbesondere von Fassadenprofilen **P**.

Die beiden Kettenbahnführungen des Fahrwerks werden von einem linken und einem rechten Rahmenteil **10** getragen oder werden direkt von den Rahmenteilen **10** ausgebildet, wobei Verbindungsbrücken **10** die beiden Rahmenteile **10** fest miteinander verbinden.

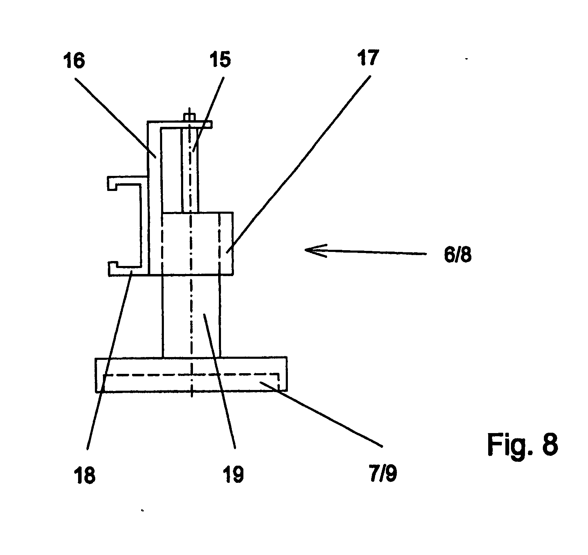

Die Schieber **6,8** tragen rahmenseitig Schieberführungen **18** (**Fig. 8**) in Gleit- oder Rollenausführung für eine sichere Führung entlang der umlaufenden Kettenbahnführungen, wie zu **Fig. 8** noch ausführlich erläutert wird.

Die Sauger **7,9** beider Endlosketten **5** müssen nicht, in Vorwärts- bzw. Rückwärtsrichtung betrachtet, wie dargestellt, synchron auf einer Höhe laufen, sie dürfen zueinander versetzt sein, was die Haftung auf der Fahrfläche **F** und das Überwinden von Fassadenprofilen **P** oder ähnlichen Hindernissen eher noch verbessert. Ein entsprechender, mehr oder weniger großer Versatz der Sauger **7,9** bezüglich beider Endlosketten **5** zueinander wird sich von allein betriebsbedingt einstellen.

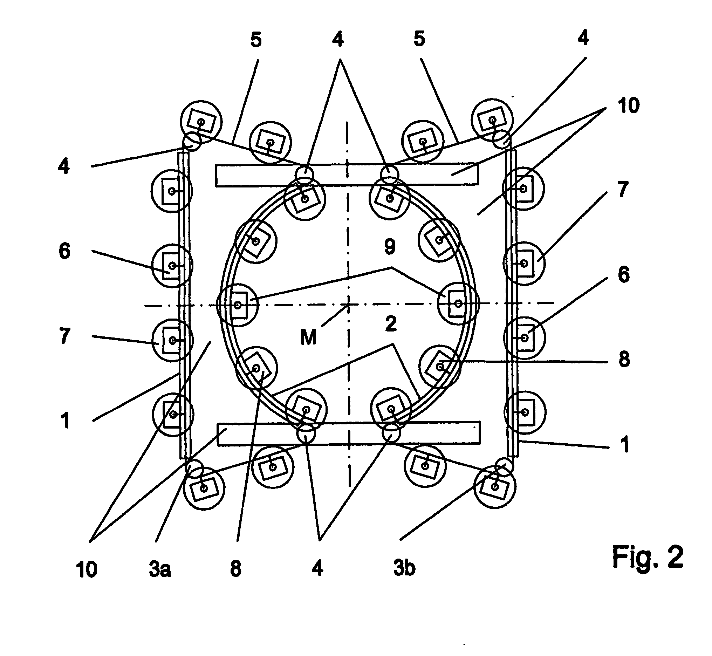

In **Fig. 2** ist eine weitere Variante dargestellt, die ebenfalls mit zwei Kettenbahnführungen **1,2** arbeitet. Im Gegensatz zur Variante nach **Fig. 1** laufen die Geradführungen **1** außen und die Teilkreisführungen **2** mit ihrem gedachten Kreismittelpunkt **M** innen. Hierdurch verbreitert sich die Spurbreite bei Geradeausfahrten, das Fahrwerk steht stabiler auf der Fahrfläche. Dies kann für bestimmte Arbeiten eines Kletterroboters an einer Fassade vorteilhaft sein. Allerdings bedingt diese Anordnung eine größere Anzahl von Saugern **7,9** und vier zusätzliche Umlenkrollen **4**. Es versteht sich, dass sich diejenigen Sauger, die aktuell quer zur Fahrrichtung laufen, immer angehoben sein müssen, ganz gleich, ob eine Geradeaus-oder Drehbewegung vollführt werden soll. Davon abgesehen entsprechen die Fahrabläufe vom Wirkprinzip denen nach der vorstehend ausführlich erläuterten Variante gemäß **Fig. 1** und **Fig. 6**, weshalb auf eine nochmalige Beschreibung der Fahrabläufe verzichtet werden dürfte.

Beide Kettenbahnführungen **1,2** des Fahrwerks werden wiederum von einem rechten und einem linken Rahmenteil **10** getragen, die über Verbindungsbrücken **10** miteinander fest verbunden sind. Die Ausbildung der Schieber **6,8** ist identisch zur Ausführung nach **Fig. 1, Fig. 6** und **Fig. 8**.

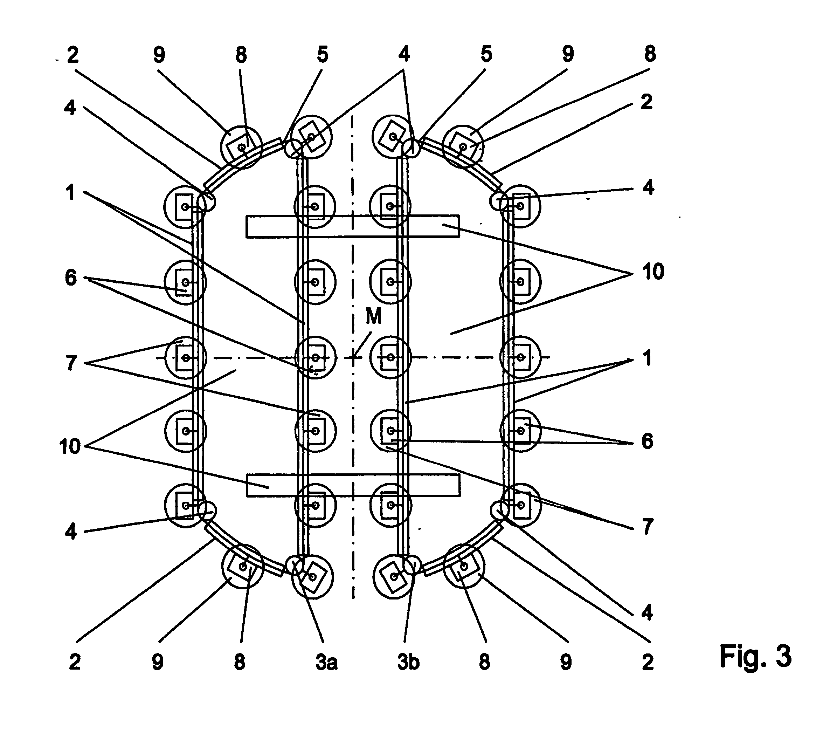

**Fig. 3** zeigt eine weitere Variante. Sie unterscheidet sich von der Variante nach **Fig. 1** dadurch, dass die beiden Kettenbahnführungen **1,2** des Fahrwerks aus jeweils zwei parallelen exakten Geradführungen **1** für das Vorwärts- und Rückwärtsfahren bzw. Auf- und Abfahren an einer Fassade und jeweils zwei die Geradführungen **1** verbindenden exakten Teilkreisführungen **2** für das Drehen und Wenden auf der Stelle zusammengesetzt sind. Die insgesamt vier Teilkreisführungen **2** sind wiederum so zueinander beabstandet und mit einem solchen Radius ausgeführt, dass sich ein gedachter Vollkreis mit einem Mittelpunkt **M** als Drehpunkt für das Fahrwerk schlagen lässt. Zwischen den inneren Geradführungen **1** und den sich anschließenden Teilkreisführungen **2** sind wiederum Antriebsräder **3a, 3b** bzw. Umlenkräder **4** angebracht, um umlaufende Ketten 5 anzutreiben und zu führen. Außerdem sind weitere Umlenkräder **4** zwischen den äußeren Geradführungen **1** und den Teilkreisführungen **2** angeordnet. Die Antriebsräder **3a, 3b** dienen zugleich als Umlenkräder. Mit den Endlosketten **5** laufen an Schiebern **6,8** befestigte Sauger **7,9** um.

Zur Geradfahrt können entweder steuerungsabhängig die Sauger **7** an den inneren Geradführungen **1** oder die Sauger **7** an den äußeren Geradführungen **1** eingesetzt werden. Durch Verwendung der äußeren Sauger **7** auf den äußeren Geradführungen **1** verbreitert sich die Fahrspur, das Fahrwerk steht stabiler auf der Fahrfläche. Dies kann für bestimmte Arbeiten eines Kletterroboters vorteilhaft sein. Für Drehbewegungen werden die Sauger **9** auf den Teilkreis-Führungen **2** eingesetzt.

Beide Kettenbahnführungen **1,2** des Fahrwerks werden wiederum von einem rechten und einem linken Rahmenteil **10** getragen, die über Verbindungsbrücken **10** miteinander fest verbunden sind.

Die Fahrabläufe entsprechen prinzipiell denen nach den vorgenannten Varianten, weshalb auf eine ausführliche Beschreibung verzichtet wird.

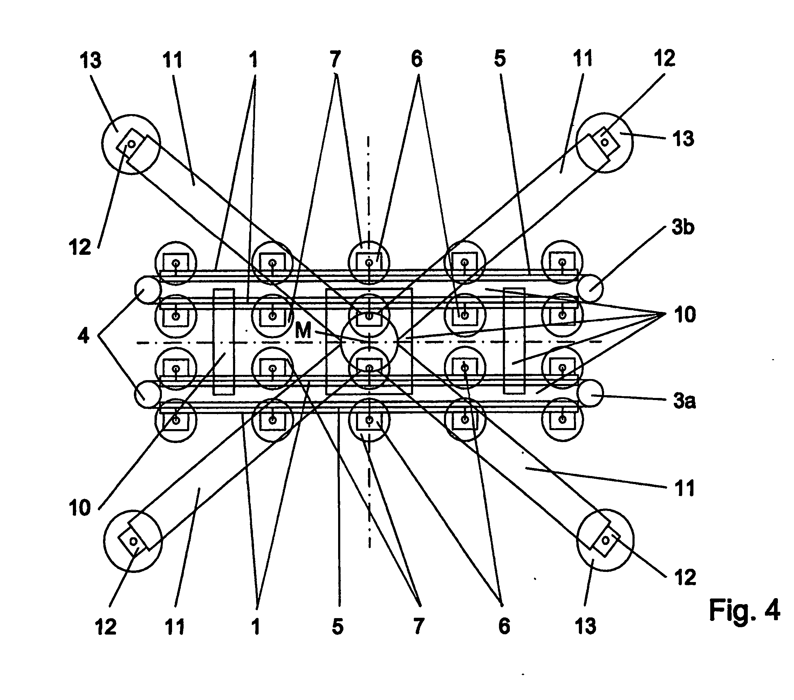

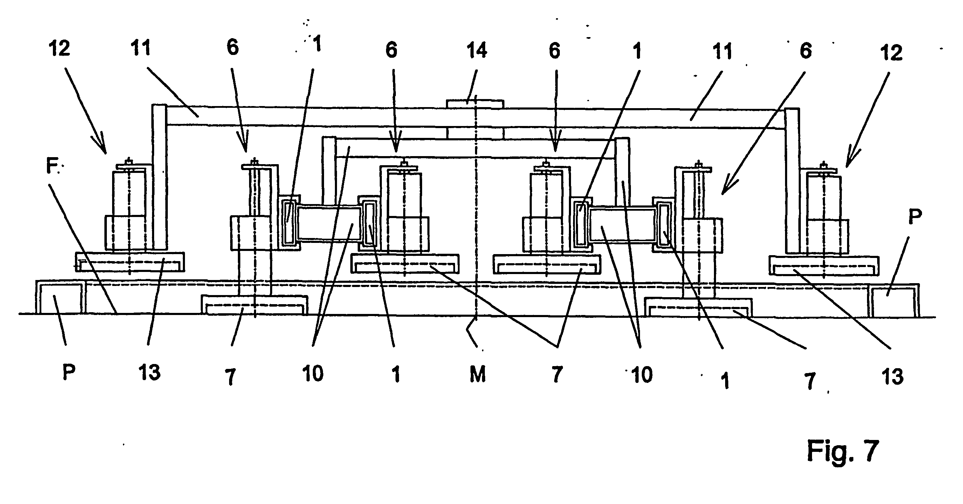

In **Fig. 4** und **Fig. 7** ist eine Variante mit zwei Kettenbahnführungen 1 in Geradführung vorgestellt, die an ihren Umlenkenden durch eine umlenkende Antriebsrolle **3a, 3b** und entgegengesetzt durch eine Umlenkrolle **4** umgelenkt werden. Die insgesamt vier Geradführungen **1** erlauben lediglich ein Vorund Rückwärtsfahren des Fahrwerks. Zur Verbreiterung der Fahrspur werden in vorteilhafter Weise zum aktiven Fahren die jeweils äußeren Sauger **7** der beiden äußeren Geradführungen **1** verwendet und die beiden inneren Geradführungen **1** zum Rückführen der dann angehobenen Sauger **7** verwendet.

Zum Drehen hängt das Fahrwerk in einem in der Fahrebene relativ zum Fahrwerk verdrehbaren Drehgestell **11**, dessen Stützen gleichfalls mit Schiebern **12** und Saugern **13** versehen sind. Somit lässt sich das Drehgestell **11** höhenmäßig aus- und einfahren. Die Drehachse **14** für das Fahrwerk und Drehgestell **11** geht durch den Mittelpunkt **M** des Drehgestells **11** und eine mittige Verbindungsbrücke **10**, die die beiden Rahmenteile **10** des Fahrwerks überbrückt. Im ausgefahrenen Zustand der Sauger **13** wird das Fahrwerk relativ zum Drehgestell **11** und damit zur Fahrfläche **F** (**Fig. 7**) angehoben und kann motorisch um die Drehachse **14** gelenkt werden.

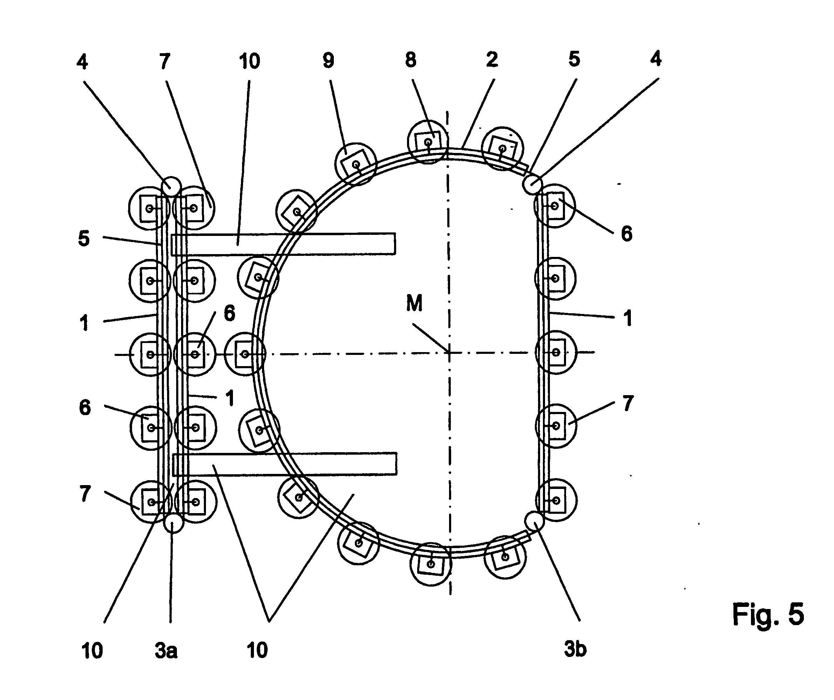

Eine weitere Variante eines Fahrwerks zeigt **Fig. 5**, stark schematisiert, wie auch alle übrigen Varianten. Es werden wieder zwei Endlosketten **5** mit Saugern **7,9** verwendet, allerdings nicht mit zueinander spiegelsymmetrischen oder symmetrischen Kettenbahnführungen, sondern mit asymmetrisch ausgebildeten Kettenbahnführungen **1,2**. Eine erste Kettenbahn läuft in zwei Geradführungen **1**, die an ihren Enden lediglich durch eine Antriebsrolle **3a** und eine Umlenkrolle **4** umgelenkt werden. Entsprechend schmal läuft die Kette **5** um. Die zweite Kettenbahn wird von einer Teilkreisführung **2** und einer weiteren Geradführung **1** gebildet, wobei der Teilkreisdurchmesser größer ist als die Länge der drei gleichlangen Geradführungen **1**. Der Teilkreis ist also außenseitig und parallel zu den beiden Geradführungen **1** der ersten Kettenbahnführung durch die weitere Geradführung **1** abgeplattet. Für Geradefahrten werden die innere Geradführung **1** oder die äußere Geradführung **1** der ersten Kettenbahnführung **1** und die Geradführung **1** auf der Außenbahn der zweiten Kettenbahnführung **1,2** benutzt. Zum Drehen wird die Teilkreisführung **2** der zweiten Kettenbahnführung **1,2** verwendet, wobei der Drehpunkt **M** asymmetrisch zur Fahrwerkmitte zu liegen kommt. Der Vorteil dieser Variante liegt in der sehr sicheren Haftung des Fahrwerks an einer Fassade sowohl beim Geradeausfahren als auch beim Drehen, und man kommt dennoch mit weniger Saugern **7,9** aus als nach der Variante gemäß **Fig. 3**.

Beide Rahmen **10** des Fahrwerks mit den Endloskettenbahnen sind über Verbindungsbrücken **10** miteinander fest verbunden. Die Schieber **6,8** sind analog zu den vorhergehenden Varianten ausgeführt.

Die Fahrabläufe entsprechen prinzipiell denen nach der ersten Variante, weshalb auf eine ausführliche Beschreibung wiederum verzichtet werden kann.

In **Fig. 8** ist ein für alle Varianten geeigneter Schieber **6,8** als Baugruppe herausgezeichnet. Er besteht im Beispiel aus einer pneumatisch betätigten Kolben-Zylindereinheit. Um eine besonders kompakte und dennoch stabile Bauweise des Schiebers zu erreichen, ist die Kolbenstange **15** des Schiebers fest angeordnet und der Zylinder **19** unter Einsatz seiner Außenkonturen höhenverschieblich in einer prismatischen Zylinderführung **17** geführt, wobei eine Stütze **16** für die Schieberführung **18** und die Kolbenstange **15**, die Kolbenstange **15** mit dem nicht sichtbaren Kolben und die Zylinderführung **17** eine zusammenhängende, stabile Baugruppe ausbilden und der Zylinder **19** an seinem unteren Ende den Sauger **7,9** trägt. Seitlich wirkende Kräfte werden nicht von der Kolbenstange **15** aufgenommen, sondern von der Zylinderführung **17** und dem Zylindergehäuse. Die Schieber **6,8** laufen kettengetrieben an ihren Schieberführungen **18** entlang einer umlaufenden Kettenbahnführung **1,2**, die von einem Rahmenteil **10** entweder selbst ausgebildet werden oder von ihm getragen werden. Zur Verminderung der Reibung kann eine Rollenführung vorgesehen sein.

Auf der Oberseite des Saugers **7,9** sind nicht näher dargestellte Steuerelemente für den Saugerbetrieb angeordnet. Jeder Sauger **7,9** besitzt einen Ejektor zur Erzeugung von Haltekraft durch Unterdruck, der über eine Druckringleitung je Kettenbahnführung **1,2** zugeführt wird. Zwecks schnellen Lösens von der Fahrfläche **F** wird Druckluft auch zum Aufheben des Unterdrucks in die Sauger **7,9** eingeblasen. Eine Mikrokontroller steuert in Zusammenarbeit mit Sensoren und pneumatischen Stell- und Regelgliedern die zeitliche Abfolge der Schieber- und Saugerzustände. Dabei werden die Ausfahrkraft für die Sauger **7,9** und die Saugkraft der aktivierten Sauger **7,9** vorteilhaft in Abhängigkeit des Ausfahrweges der Schieber **6,8** (Hindernis) beeinflusst, wobei erst im voll ausgefahrenen Zustand eines Saugers **7,9** die volle Stützkraft und der volle Unterdruck aufgebaut werden, um ein Ausheben des Fahrwerks an größeren Hindernissen zu vermeiden. Wird ein solcherart Hindernis festgestellt, hält das Fahrwerk automatisch an und wartet auf ein geeignetes Fahrmanöver. Außerdem wird im Fahrbetrieb stets geprüft, ob eine genügend große Haftkraft gegen Absturz des Fahrwerks an Fassaden herrscht. Droht eine programmmäßig festgelegte Haftkraft unterschritten zu werden, beispielsweise weil unzulässig viel Sauger keinen Kontakt zur Fahrfläche finden (Fahrbahnende, Fassadenöffnung, Fassadenknick, ungeeignete Fahrbahnbeschaffenheit, Störung in der Druckluftzufuhr bzw. im Vakuumaufbau an einem Sauger u. a.), hält das Fahrwerk automatisch an.

### Bezugszeichen

- 1,2: Kettenbahnführung
- 1: Geradführung einer Kettenbahnführung
- 2: Teilkreisführung einer Kettenbahnführung
- 3a, 3b: Antriebsräder
- 4: Umlenkräder
- 5: Kette
- 6,8: Schieber des Fahrwerks
- 6: Schieber, aktuell geradgeführt
- 8: Schieber, aktuell teilkreisgeführt
- 7,9: Sauger
- 7: Sauger, aktuell geradgeführt
- 9: Sauger, aktuell teilkreisgeführt
- 10: rechter und linker Rahmen mit Verbindungsbrücken
- 11: Drehgestell
- 12: Schieber des Drehgestells
- 13: Sauger des Drehgestellschiebers
- 14: Drehachse
- 15: Kolbenstange
- 16: Stütze
- 17: Zylinderführung
- 18: Schieberführung
- 19: Zylindergehäuse
- M: Mittelpunkt der Teilkreisführungen 2
- F: Fahrbahn (Fassade)
- P: Fassadenprofil

## Patentansprüche

1. Selbstkletterndes Fahrwerk für Fassaden, insbesondere Glasfassaden, mit einem Antrieb aus Endlosreihen steuerbarer Sauger,
**dadurch gekennzeichnet,**
**dass** die Sauger (7,9) in der Fahrebene umlaufen und ihre Saugseiten stets zur Fahrfläche (F) weisen.

2. Selbstkletterndes Fahrwerk nach Anspruch 1,
**dadurch gekennzeichnet,**
**dass** aktuell aktivierte Sauger (7,9) einer Endlosreihe auf der Fahrfläche (F) aufsitzen und aktuell nicht aktivierte Sauger (9,7) einer Endlosreihe in einem Abstand zur Fahrfläche (F) umlaufen, der gleich oder größer ist als die Höhe zu überwindender Hindernisse (P).

3. Selbstkletterndes Fahrwerk nach Anspruch 1 oder 2,
**dadurch gekennzeichnet,**
**dass** die Sauger (7,9) jeder Endlosreihe in einer Bahnführung (1,2) umlaufen und untereinander über ein Triebmittel (5) verbunden sind.

4. Selbstkletterndes Fahrwerk nach Anspruch 2 und 3,
**dadurch gekennzeichnet,**
**dass** die Sauger (7,9) an Schiebern (6,8) befestigt sind, die längs der Bahnführungen (1,2) des Fahrwerks triebmittelgezogen laufen.

5. Selbstkletterndes Fahrwerk nach Anspruch 3 oder 4,
**dadurch gekennzeichnet,**
**dass** als Triebmittel für die Sauger (7,9) eine kettenradgetriebene Kette (5) dient.

6. Selbstkletterndes Fahrwerk nach mindestens einem der vorstehenden Ansprüche,
**dadurch gekennzeichnet,**
**dass** mindestens zwei gleichsinnig angesteuerte und parallel laufende Geradführungen (1) im Fahrwerk dem Geradeausfahren (Vorwärtsfahren, Rückwärtsfahren) des Fahrwerks dienen.

7. Selbstkletterndes Fahrwerk nach Anspruch 6,
**dadurch gekennzeichnet,**
**dass** das Fahrwerk an einem in der Fahrebene relativ zum Fahrwerk verdrehbaren Drehgestell (11) mit seinerseits ausfahrbaren Saugern (13) hängt.

8. Selbstkletterndes Fahrwerk nach Anspruch mindestens einem der Ansprüche 1 bis 6,
**dadurch gekennzeichnet,**
**dass** die Bahnführungen (1,2) in Geradführungen (1) und Teilkreisführungen (2) aufgeteilt sind.

9. Selbstkletterndes Fahrwerk nach Anspruch 6 oder 8,
**dadurch gekennzeichnet,**
**dass** die jeweils äußersten Geradführungen (1) dem Geradeausfahren dienen.

10. Selbstkletterndes Fahrwerk nach Anspruch 8,
**dadurch gekennzeichnet,**
**dass** mindestens zwei gleichsinnig angesteuerte Teilkreisführungen (2) zweier Bahnführungen (1,2) dem Drehen (Uhrzeigersinn, Gegenuhrzeigersinn) des Fahrwerks dienen.

11. Selbstkletterndes Fahrwerk nach einem der Ansprüche 1 bis 4,
**dadurch gekennzeichnet,**
**dass** an jedem Sauger (7,9) ein Ejektor zur Erzeugung von Haltekraft durch Unterdruck angeordnet ist, der über eine Druckringleitung gespeist wird, und in jeden Sauger (7,9) Druckluft zum Aufheben des Unterdrucks einblasbar ist.

12. Selbstkletterndes Fahrwerk nach Anspruch 4,
**dadurch gekennzeichnet,**
**dass** ein Schieber (6,8) eine pneumatisch ansteuerbare Kolben-Zylindereinheit (15, 19) besitzt, wobei der Zylinder (19) längs einer vertikalen Zylinderführung (17) vertikal bewegbar ist, die mit der Kolbenstange (15) und einer Stütze (16) des Schiebers (6,8) mit der daran befestigten Schieberführung (18) eine kompakte Baugruppe bildet, die in der Bahnführung (1,2) eines Rahmenteils (10) des Fahrwerks läuft, und wobei der vertikal geführte Zylinder (19) auf den Unterseiten den Sauger (7,9) trägt.

13. Selbstkletterndes Fahrwerk nach einem der Ansprüche 1 bis 12,
**dadurch gekennzeichnet,**
**dass** eine Fahrsteuerung die Haftkraft des Fahrwerks an einer Fassade überwacht und bei einer absehbaren Unterschreitung einer vorbestimmten Haftkraft das Fahrwerk still legt.

14. Selbstkletterndes Fahrwerk nach einem der Ansprüche 2 bis 13,
**dadurch gekennzeichnet,**
**dass** eine Fahrsteuerung ein Absenken und Absetzen der Sauger (7,9) auf die Fahrfläche (F), sowie ein Abheben und Zurückführen der Sauger (7,9) in die Grundstellung bewirkt.

15. Selbstkletterndes Fahrwerk nach Anspruch 1 bis 10, 13 und 14,
**dadurch gekennzeichnet,**
**dass** die Sauger (7,9) durch magnetische Haftelemente ersetzt sind.

## Claims

1. Automatic climbing mechanism for façades, especially glass façades, with a drive comprising endless lines of controllable suction devices, charactensed in that the suction devices (7, 9) rotate in the driving plane and their suction sides always point to the driving surface (F).

2. Automatic climbing mechanism according to claim 1, **characterised in that** the currently activated suction devices (7, 9) of an endless line rest on the driving surface (F) and currently inactivated suction devices (9, 7) of an endless line rotate at a distance from the driving surface (D), which is equal to or greater than the height of obstacles to be overcome (P).

3. Automatic climbing mechanism according to claim 1 or 2, **characterised in that** the suction devices (7, 9) of each endless line rotate in a track guide (1, 2) and are connected together by a drive means (5).

4. Automatic climbing mechanism according to claim 2 and 3, **characterised in that** the suction devices (7, 9) are secured to slides (6, 8), which are drawn along the tracks guides (1, 2) of the mechanism by the drive means.

5. Automatic climbing mechanism according to claim 3 or 4, **characterised in that** a chain-wheel driven chain (5) functions as the drive means for the suction devices (7, 9).

6. Automatic climbing mechanism according to at least one of the preceding claims, **characterised in that** at least two straight guides (1) driven in the same direction and running parallel to one another in the mechanism are used for driving the mechanism straight on (forwards drive, reverse drive).

7. Automatic climbing mechanism according to claim 6, **characterised in that** the mechanism is suspended with its extendable suction devices (13) on a rotary frame (11) which is rotatable in the drive plane relative to the mechanism.

8. Automatic climbing mechanism according to at least one of claims 1 to 6, **characterised in that** the track guides (1, 2) are divided into straight guides (1) and part circular guides (2).

9. Automatic climbing mechanism according to claim 6 or 8, **characterised in that** the outermost straight guides (1) are used for driving straight on.

10. Automatic climbing mechanism according to claim 8, **characterised in that** at least two part-circular guides (2) driven in the same direction of two track guides (1,2) are used for rotating the mechanism (clockwise, anticlockwise).

11. Automatic climbing mechanism according to one of claims 1 to 4, **characterised in that** an ejector is arranged on every suction device (7, 9) to generate holding force at low pressure, which is supplied via a pressing ring line, and compressed air can be blown into each suction device (7, 9) to equalise the low pressure.

12. Automatic climbing mechanism according to claim 4, **characterised in that** a slide (6, 8) comprises a pneumatically drivable piston cylinder unit (15, 19), whereby the cylinder (19) can be moved vertically along a vertical cylinder guide (17), which forms a compact subunit with the piston rod (15) and a support (16) of the slide (6, 8) with the slide guide (18) secured thereon, which subunit runs in the track guide (1, 2) of a frame section (10) of the mechanism, and whereby the vertically guided cylinder (19) supports the suction device (7, 9) underneath.

13. Automatic climbing mechanism according to one of claims 1 to 12, **characterised in that** a drive control system monitors the adhesive force of the mechanism on a façade and stops the mechanism if the required degree of adhesion is not reached.

14. Automatic climbing mechanism according to one of claims 2 to 13, **characterised in that** a drive control system initiates the lowering and placing of the suction devices (7, 9) onto the driving surface (F) and raises and returns the suction devices (7, 9) to the initial position.

15. Automatic climbing mechanism according to claims 1 to 10, 13 and 14, **characterised in that** the suction devices (7, 9) are replaced by magnetic adhesive elements.

## Revendications

1. Châssis autogrimpant pour des façades, notamment des façades de verre, comprenant un entraînement constitué de séries sans fin de suceurs commandables,
**caractérisé en ce que**
les suceurs (7, 9) se déplacent dans le plan de circulation et ont leurs côtés d'aspiration toujours dirigés vers la surface de circulation (F).

2. Châssis autogrimpant selon la revendication 1,
**caractérisé en ce que**
les suceurs (7, 9) actuellement activés d'une série sans fin sont posés sur la surface de circulation (F), tandis que les suceurs (9, 7) actuellement non activés d'une série sans fin se trouvent espacés de la surface de circulation (F) d'une distance égale ou supérieure à la hauteur des obstacles (P) à surmonter.

3. Châssis autogrimpant selon la revendication 1 ou 2,
**caractérisé en ce que**
les suceurs (7, 9) de chaque série sans fin circulent dans un guidage de voie (1, 2) et sont reliés par un moyen d'entraînement (5).

4. Châssis autogrimpant selon la revendication 2 ou 3,
**caractérisé en ce que**
les suceurs (7, 9) sont fixés sur des coulisseaux (6, 8) qui se déplacent le long des guidages de voie (1, 2) du châssis en étant tirés par les moyens d'entraînement.

5. Châssis autogrimpant selon la revendication 3 ou 4,
**caractérisé en ce qu'**
une chaîne (5) entraînée par un pignon sert de moyen d'entraînement des suceurs (7, 9).

6. Châssis autogrimpant selon au moins une des revendications précédentes,
**caractérisé en ce qu'**
au moins deux guidages rectilignes (1) et parallèles commandés dans le même sens servent au déplacement du châssis en ligne droite (en avant, en arrière).

7. Châssis autogrimpant selon la revendication 6,
**caractérisé en ce que**
le châssis est suspendu à un châssis pivotant (11) pouvant tourner par rapport à lui dans le plan de circulation et qui de son côté possède des suceurs (13) mobiles.

8. Châssis autogrimpant selon au moins une des revendications 1 à 6,
**caractérisé en ce que**
les guidages de voie (1, 2) sont divisés en guidages rectilignes (1) et guidages semi-circulaires (2).

9. Châssis autogrimpant selon la revendication 6 ou 8,
**caractérisé en ce que**
les guidages rectilignes (1) les plus à l'extérieur servent à assurer le déplacement rectiligne.

10. Châssis autogrimpant selon la revendication 8,
**caractérisé en ce qu'**
au moins deux guidages semi-circulaires (2), commandés dans le même sens et appartenant à deux guidages de voie (1, 2) servent à faire tourner le châssis (dans le sens où le sens contraire des aiguilles d'une montre).

11. Châssis autogrimpant selon une des revendications 1 à 4,
**caractérisé en ce que**
sur chaque suceur (7, 9) est monté un éjecteur qui produit la force de maintien par dépression en étant alimenté par une conduite annulaire de pression, et dans chaque aspirateur (7, 9) de l'air sous pression peut être injecté pour supprimer la dépression.

12. Châssis autogrimpant selon la revendication 4,
**caractérisé en ce qu'**
un coulisseau (6, 8) possède une unité piston/cylindre (15, 19) à commande pneumatique, dont le cylindre (19) peut se déplacer le long d'un guidage vertical (17) qui forme avec la tige de piston (15), le support (16) du coulisseau (6, 8) et le guidage de coulisseau (18) fixé à ce support, un groupe constructif compact qui se déplace dans le guidage de voie (1, 2) d'une partie de cadre (10) du châssis, le cylindre (19) guidé verticalement portant le suceur (7, 9) sur sa face inférieure.

13. Châssis autogrimpant selon une des revendications 1 à 12,
**caractérisé en ce qu'**
une commande de déplacement surveille la force de maintien du châssis sur une façade et immobilise ce châssis quand il apparaît que cette force de maintien descend en dessous d'une valeur prédéterminée.

14. Châssis autogrimpant selon une des revendications 2 à 13,
**caractérisé en ce qu'**
une commande de déplacement assure la descente et la pose du suceur (7, 9) sur la surface de circulation (F) ainsi que la remontée et le retour du suceur (7, 9) à sa position de base.

15. Châssis autogrimpant selon une des revendications 1 à 10, la revendication 13 et la revendication 14,
**caractérisé en ce que**
les suceurs (7, 9) sont remplacés par des éléments d'adhérence magnétiques.
